# FASCICULE DE BREVET EUROPEEN

(11) **EP 3 406 135 B1**
(45) Date de publication et mention de la délivrance du brevet: **25.10.2023**
(21) Numéro de dépôt: 18172649.8
(22) Date de dépôt: 16.05.2018
(51) Int. Cl.: A01K 1/015

(54) **CAILLEBOTIS CHAUFFANT OU RAFRAÎCHISSANT, NOTAMMENT POUR UNE INSTALLATION DE MATERNITÉ POUR PORCELETS**
HEIZBARER ODER KÜHLBARER GITTERROST, INSBESONDERE FÜR EINE FERKELAUFZUCHTANLAGE
COOLING OR HEATING GRATING, IN PARTICULAR FOR A PIGLET BIRTHING FACILITY

(30) Priorité: 24.05.2017 FR 1754600
(43) Date de publication de la demande: 28.11.2018
(73) Titulaire: Fournier, 35300 Fougeres (FR)
(72) Inventeur: BONNINGUES, Nicolas, 35133 ROMAGNE (FR)
(74) Mandataire: Cousin, Geoffroy

(56) Documents cités:
- EP-A1- 0 118 139
- EP-A1- 0 368 427
- EP-A1- 1 803 347
- EP-B1- 0 118 139
- EP-B1- 0 368 427
- WO-A1-2017/064417
- DE-U1- 9 205 267
- FR-A1- 2 996 104
- NL-C2- 1 007 565
- US-A- 3 809 014

## Description

### 1. Domaine de l'invention

Le domaine de l'invention est celui des installations d'élevage d'animaux, et plus particulièrement des porcelets qui sont élevés dans les premiers temps avec leur mère.

Plus particulièrement, la présente invention concerne les caillebotis mis en oeuvre dans de telles installations.

### 2. Art antérieur

Dans le domaine de l'élevage, il est connu des bâtiments et aménagements de maternité pour porcelets.

Classiquement, le plancher de tels bâtiments d'élevage est constitué d'un assemblage de caillebotis en béton présentant de multiples orifices et reposant sur des murs périphériques délimitant une cuve de stockage et l'évacuation des déjections des animaux.

Les excréments des animaux se déplaçant sur le plancher s'écoulent dans la cuve à travers les orifices des caillebotis. Il suffit alors de les évacuer par un courant d'eau ou tout autre moyen.

Dans les trois ou quatre premières semaines, les porcelets doivent rester en contact avec leurs mères afin de téter régulièrement.

Les installations actuelles de maternité disposent de postes comportant un emplacement pour la truie et un autre pour les porcelets. Les porcelets traversent les grilles ou au moins leurs têtes, pour téter leur mère. La truie se couche le long de cette grille et présente ses pis vers les porcelets qui se situent de l'autre coté.

Il est connu que les porcelets ne peuvent pas maintenir leur température corporelle et sont donc sensibles aux variations de température ambiante.

C'est pourquoi il est nécessaire de prévoir, dans la partie destinée à la croissance des porcelets, une zone chauffée.

Le chauffage est réalisé de préférence par des éléments rayonnant de la chaleur, comme par exemple des lampes infrarouges avec déflecteur.

Il est également connu qu'une température ambiante excessive peut avoir des effets néfastes sur les truies, en particulier une diminution de la consommation alimentaire ce qui dégrade la qualité de l'allaitement des truies.

Il est donc nécessaire de prévoir dans la partie destinée aux truies des moyens de refroidissement, tels que des ventilateurs.

Ces solutions de chauffage et de refroidissement des porcelets et des truies respectivement ne donnent pas entièrement satisfaction.

En effet, la déperdition thermique des éléments rayonnant de la chaleur est relativement importante. En outre, leur utilisation est coûteuse et leur efficacité difficilement maîtrisable.

Par ailleurs, il est difficile de focaliser les moyens de refroidissement uniquement sur les truies. Le flux d'air émis par les ventilateurs empiète généralement sur les zones chauffées, réduisant ainsi l'efficacité du chauffage destiné aux porcelets et augmentant de ce fait les risques pour la santé de ces derniers.

Il existe donc un réel besoin de moderniser les équipements de maternité pour animaux d'élevage, et de proposer une solution permettant de résoudre tout ou partie des inconvénients cités.

Le document US 3809014 A décrit un système de plancher pour les abris d'animaux utilisant des lattes thermoplastiques et comprenant des moyens prévus dans le plancher pour faire circuler un fluide d'échange de chaleur à travers celui-ci.

### 3. Résumé de l'invention

L'invention propose à cet effet un caillebotis de plancher de bâtiment d'élevage d'animaux, notamment de porcelets et/ou de truies, comprenant plusieurs ouvertures d'écoulement des déjections animales.

Selon l'invention, le caillebotis comprend au moins un conduit de circulation d'un fluide caloporteur disposé dans ledit caillebotis, lors du moulage du caillebotis.

Ainsi, la solution proposée repose sur une approche tout à fait nouvelle et inventive permettant de fournir aux porcelets ou aux truies une surface chauffée ou refroidie sur laquelle ils peuvent s'étendre.

Pour ce faire, le caillebotis incorpore un ou plusieurs conduits qui sont enrobés par le matériau formant le caillebotis, et donc noyés dans ce dernier, un fluide caloporteur, tel que de l'eau chaude ou froide, pouvant circuler dans ce ou ces conduits.

Un ou plusieurs de ces caillebotis peuvent être mis en oeuvre dans les emplacements dédiés aux porcelets en y faisant circuler de l'eau chaude de sorte à ce que les porcelets puisse maintenir leur température corporelle (on parle alors de caillebotis chauffant).

Un ou plusieurs de ces caillebotis peuvent être mis en oeuvre dans les emplacements dédiés aux truies en y faisant circuler de l'eau froide de sorte à assurer la qualité de l'allaitement des truies (on parle alors de caillebotis rafraîchissant).

Selon un mode de réalisation particulier de l'invention, le caillebotis comprend plusieurs rangées d'ouvertures traversantes d'écoulement des déjections animales s'étendant parallèlement à l'axe longitudinal dudit caillebotis, au moins une portion dudit conduit de circulation d'un fluide caloporteur s'étendant entre deux rangées d'ouvertures consécutives.

Selon un aspect particulier de l'invention, ledit au moins un conduit de circulation d'un fluide caloporteur présente la forme d'un serpentin s'étendant en partie entre chacune des rangées d'ouvertures.

Ceci permet d'obtenir en fonctionnement une température homogène sur toute la surface supérieure du caillebotis.

Une telle solution de régulation thermique est fiable, efficace et économique.

Selon un autre mode de réalisation particulier de l'invention, le caillebotis plusieurs ouvertures d'écoulement des déjections animales s'étendant perpendiculairement à l'axe longitudinal dudit caillebotis, au moins une portion dudit conduit de circulation d'un fluide caloporteur s'étendant entre deux ouvertures consécutives.

Selon un aspect particulier de l'invention, ledit au moins un conduit de circulation d'un fluide caloporteur présente la forme d'un serpentin s'étendant en partie entre chacune des ouvertures ou entre des groupes d'au moins deux ouvertures consécutives.

La surface du caillebotis présente ainsi une température homogène.

Selon un aspect particulier de l'invention, ledit au moins un conduit de circulation d'un fluide caloporteur s'étend d'une extrémité longitudinale du caillebotis à l'extrémité opposée.

Selon un aspect particulier de l'invention, ledit au moins un conduit de circulation d'un fluide caloporteur comprend au moins un raccord d'alimentation en fluide caloporteur et au moins un raccord d'évacuation du fluide caloporteur.

Selon un aspect particulier de l'invention, les raccords d'alimentation et d'évacuation débouchent au niveau de la surface inférieure du caillebotis opposée à la surface supérieure de plancher du caillebotis.

Selon un aspect particulier de l'invention, les raccords d'alimentation et d'évacuation sont inclinés par rapport à la surface inférieure du caillebotis.

Selon un aspect particulier de l'invention, ledit au moins un raccord d'alimentation en fluide caloporteur est situé à une première extrémité longitudinale du caillebotis et ledit au moins un raccord d'évacuation en fluide caloporteur est située à l'extrémité longitudinale opposée dudit caillebotis.

Selon un aspect particulier de l'invention, le caillebotis est en béton.

La présente invention concerne également un plancher de bâtiment d'élevage, notamment de porcelets et/ou de truies, mettant en oeuvre une pluralité de caillebotis tels que décrits précédemment.

L'invention concerne également un procédé de fabrication d'un caillebotis de plancher de bâtiment d'élevage d'animaux, caractérisé en ce qu'il comprend les étapes suivantes :
- positionner au moins un conduit de circulation d'un fluide caloporteur dans un moule de forme appropriée pour mettre en forme ledit caillebotis,
- couler un matériau à l'intérieur dudit au moins un moule de façon à ce que ledit matériau enrobe ledit au moins un conduit de circulation d'un fluide caloporteur,
- retrait du caillebotis dudit moule.

Ainsi, la surface externe du conduit de fluide caloporteur est noyée à l'intérieur du caillebotis et est entièrement en contact avec le caillebotis ce qui permet d'augmenter la surface d'échange thermique du caillebotis et donc l'efficacité de celui-ci.

### 4. Liste des figures

D'autres caractéristiques et avantages de l'invention apparaîtront à la lecture de la description suivante de modes de réalisation particuliers, donnés à titres de simples exemples illustratifs et non limitatifs, et des figures annexées, à savoir :
- la figure 1 est une vue en perspective d'un caillebotis selon un premier mode de réalisation de l'invention mettant en oeuvre un conduit de circulation d'un fluide caloporteur ;
- la figure 2 est une vue de dessus du caillebotis de la figure 1 ;
- la figure 3 est une vue en coupe de la figure 2 selon l'axe transversal A-A ;
- la figure 4 est une vue de dessus de deux caillebotis tels qu'illustrés sur la figure 1 lorsqu'ils sont juxtaposés et forment une partie d'un plancher d'une installation d'élevage ;
- la figure 5 est une vue en perspective d'un caillebotis selon un deuxième mode de réalisation de l'invention mettant en oeuvre un conduit de circulation d'un fluide caloporteur.

### 5. Description détaillée d'un mode de réalisation de l'invention

Les figures présentées par la suite illustrent un caillebotis selon plusieurs modes de réalisation de l'invention comprenant un conduit de circulation d'un fluide caloporteur en forme de serpentin.

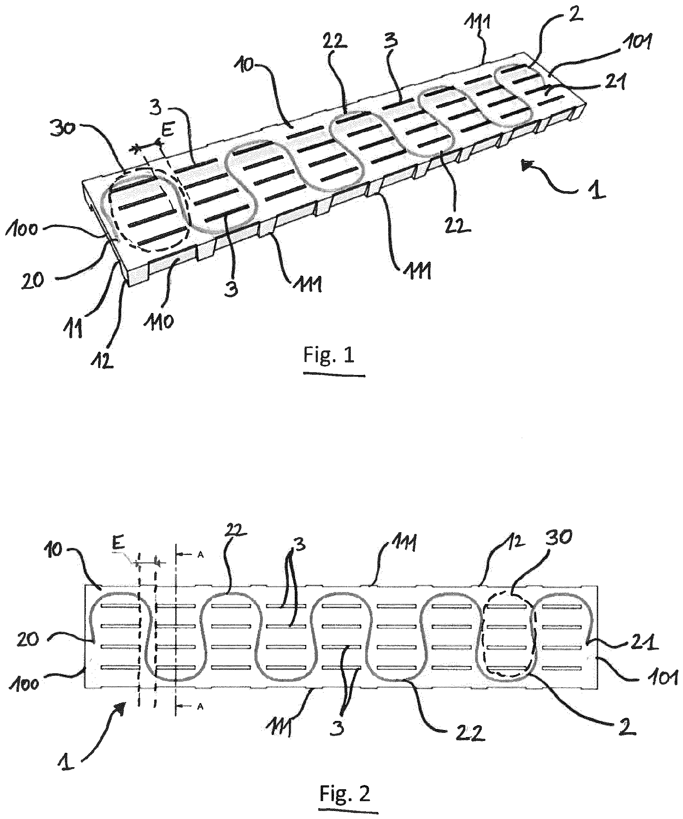

Selon un premier mode de réalisation tel que visible sur les figures 1 et 2, le caillebotis (1) est de forme parallélépipédique. Il est dans cet exemple fabriqué en béton. Ce béton peut être armé d'une armature métallique.

Ses dimensions sont dans cet exemple de 2,50 mètres de longueur par 0,50 mètre de largeur, sa hauteur étant égale à 0,10 mètre.

Toutefois d'autres dimensions peuvent être envisagées afin d'adapter le caillebotis aux dimensions de l'installation d'élevage dans laquelle le caillebotis doit être installé.

Le caillebotis (1) comprend une surface supérieure (10) dite de plancher, destinée à supporter les animaux (porcelets, truies,...), une surface inférieure (11) et des surfaces d'appui (12) destinées à venir reposer sur des éléments de fondation ou directement sur le sol de l'installation.

Tel qu'illustré, les surfaces supérieure (10), inférieure (11) et d'appui (12) sont parallèles entre-elles.

Des ouvertures (3) identiques de forme rectangulaire et destinées à l'écoulement des déjections animales, sont réparties sur la surface supérieure (10) de plancher de sorte à former plusieurs rangées (30) d'ouvertures (3).

Chacune des ouvertures (3) est traversant, c'est-à-dire qu'elles traversent le caillebotis dans le sens de la hauteur, depuis la surface supérieure (10) jusqu'à déboucher au niveau de la surface inférieure (11).

L'axe longitudinal des ouvertures (3) est parallèle à l'axe longitudinal du caillebotis (1).

La largeur de ces ouvertures (3) est choisie de manière telle qu'elles permettent l'écoulement de lisier tout en prévenant le passage d'un membre d'un animal à travers le caillebotis (1).

La surface supérieure (10) du caillebotis présente des irrégularités procurant un effet anti-dérapant.

Le nombre de rainures par caillebotis peut varier en fonction de la surface de celui-ci.

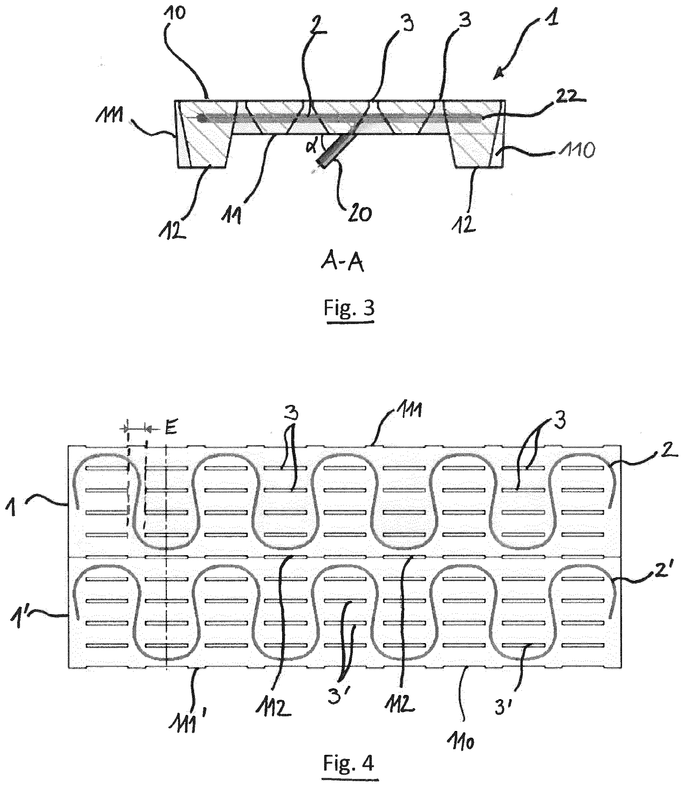

Tel que visible sur la figure 3, la section des ouvertures (3) est de forme sensiblement conique ou en entonnoir, la partie évasée étant située du côté de la surface inférieure (11).

Les rangées (30) d'ouvertures (3) sont espacées d'une distance (E) entre elles et sont alignées.

Dans le mode de réalisation illustré, le caillebotis (1) comprend neuf rangées (30) d'ouvertures (3) comprenant chacune quatre ouvertures (3) espacées transversalement.

Le caillebotis (1) comprend en outre des butées (111) réparties sur ses bords longitudinaux et s'étendant sur la hauteur du caillebotis (1). Les butées (111) présentent une largeur égale à l'espacement (E) entre deux rangées (30) d'ouvertures (3) successives.

Les butées (111) sont alignées avec les espacements successifs entre deux rangées (30) d'ouvertures (3).

Les butées (111) sont séparées par des nervures (110).

Dans le mode de réalisation illustré, la régulation thermique du caillebotis (1) est réalisée au moyen d'un conduit (2) de circulation d'un fluide caloporteur situé à l'intérieur du caillebotis, à savoir entre la surface supérieure (10) de plancher et la surface inférieure (11).

Une première extrémité du conduit (2) de circulation d'un fluide caloporteur présente un raccord d'alimentation (20) destiné à être relié à un tuyau d'alimentation en fluide caloporteur ou bien à un raccord d'évacuation d'un caillebotis adjacent.

Une seconde extrémité du conduit (2) de circulation d'un fluide caloporteur présente un raccord d'évacuation (21) destiné à être monté relié à un tuyau d'évacuation du fluide caloporteur ou bien à un raccord d'alimentation d'un caillebotis adjacent.

Dans le mode de réalisation illustré, les raccords d'alimentions (20) et d'évacuation (21) sont situés sensiblement au centre des extrémités longitudinales, ou bords latéraux, (100, 101), du caillebotis (1).

Le conduit (2) de circulation d'un fluide caloporteur se présente ici sous la forme d'un serpentin.

En d'autres termes, le conduit (2) de circulation d'un fluide caloporteur s'étend d'un bord latéral du caillebotis (1) vers l'autre bord latéral en ondulant entre les rangées (30) d'ouvertures (3).

Les coudes (22) du conduit (2) de circulation d'un fluide caloporteur s'étendent aux extrémités supérieure et inférieure des rangées (30) d'ouvertures (3).

Un tel agencement du conduit (2) de circulation d'un fluide caloporteur permet d'homogénéiser la température du caillebotis (1) et d'augmenter la surface d'échange thermique entre le conduit (2) et le ou les animaux se trouvant sur la surface supérieure (10) de plancher.

Les raccords d'alimentation (20) et d'évacuation (21) du conduit (2) de circulation d'un fluide caloporteur sont de préférence souples et font saillie depuis la surface inférieure (11) de manière inclinée, formant un angle (α) compris entre 30° et 70°, préférentiellement de l'ordre de 45° comme illustré.

Cette inclinaison permet de faciliter l'écoulement du fluide caloporteur et évite que les raccords ne dépassent du plan formé par les surfaces d'appui (12), facilitant ainsi la manipulation, le stockage et le transport des caillebotis.

La figure 4 montre la juxtaposition de deux caillebotis (1, 1') destinés à former en partie le plancher d'une installation de maternité pour porcelets.

Lorsque les butées (111, 111') des deux caillebotis (1, 1') adjacents sont plaquées les unes contre les autres, elles forment des lumières (112) également destinées à l'écoulement des déjections animales.

Chacun des caillebotis (1, 1') comprend un conduit (2, 2') de circulation d'un fluide caloporteur, les conduits (2, 2') pouvant être alimentés par une même source, ou bien le conduit (2) alimentant le conduit (2').

Un plancher composé d'une juxtaposition de caillebotis conformes à l'invention permet de définir une ou plusieurs zones, formées chacune par un ou plusieurs caillebotis, qui sont soit chauffées par de l'eau chaude lorsqu'elles sont destinées aux porcelets ou refroidies par de l'eau froide lorsqu'elles sont destinées aux truies.

Dans le mode de réalisation décrit précédemment, le conduit de circulation de fluide caloporteur serpente entre chaque rangée d'ouvertures.

Dans un mode de réalisation particulier, un unique conduit pourrait serpenter entre les ouvertures d'une même rangée, ou bien toutes les deux ou trois rangées, par exemple.

Les coudes pourraient s'étendre entre deux ouvertures d'une même rangée.

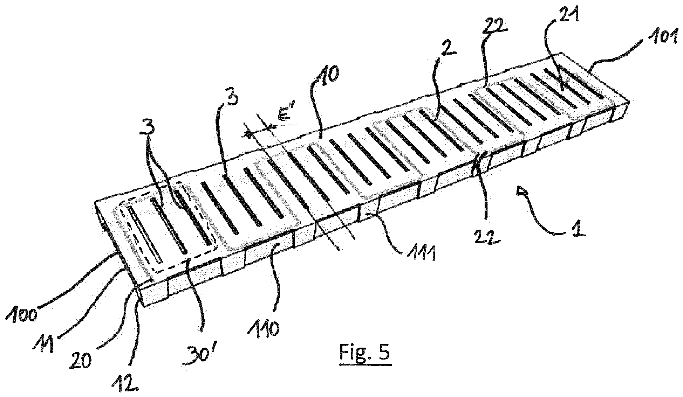

Dans un deuxième mode de réalisation, illustré en figure 5, seuls les aspects distincts du premier mode de réalisation sont décrits par la suite, les éléments identiques présentant les mêmes signes de référence.

Le caillebotis (1) comprend, sur une surface supérieure (10), des ouvertures (3) identiques de forme rectangulaire et s'étendant perpendiculairement à l'axe longitudinal dudit caillebotis (1).

Les ouvertures (3) sont espacées d'une distance (E') entre elles et sont alignées.

Le conduit (2) de circulation d'un fluide caloporteur, qui permet la régulation thermique du caillebotis (1), ondule de manière sensiblement rectangulaire entre certaines des ouvertures (3).

En l'espèce, le conduit (2) serpente entre des groupes (30') de trois ouvertures (3) consécutives.

Les coudes (22) du conduit (2) de circulation d'un fluide caloporteur s'étendent parallèlement à l'axe longitudinal du caillebotis (1) s'étendent à proximité des extrémités des ouvertures (3).

Le conduit (2) de circulation d'un fluide caloporteur s'étend d'un bord latéral (100) du caillebotis (1) vers l'autre bord latéral (101) en ondulant entre plusieurs groupes (30') d'ouvertures (3).

Il pourrait toutefois onduler dans l'espace séparant chacune des ouvertures (3), ou entre des groupes de deux ouvertures consécutives ou plus.

Les raccords d'alimentation (20) et d'évacuation (21) du conduit (2) de circulation d'un fluide caloporteur sont sensiblement situés aux extrémités transversales opposées du caillebotis (1).

Un caillebotis conforme à l'invention est obtenu par un procédé de fabrication comprenant les étapes suivantes :
- positionner au moins un conduit de circulation d'un fluide caloporteur dans un moule de forme appropriée pour mettre en forme ledit caillebotis,
- couler un matériau, tel que du béton, à l'intérieur dudit au moins un moule de façon à ce que ledit matériau enrobe ledit au moins un conduit de circulation d'un fluide caloporteur,
- retrait du caillebotis dudit moule.
Avant le retrait du caillebotis, le procédé comprend une étape de durcissement du matériau de manière à ce que celui-ci prenne et conserve la forme de l'empreinte du moule.

L'obtention d'un caillebotis par un tel procédé de fabrication permet de s'assurer que toute la surface externe du conduit de circulation d'un fluide caloporteur, noyé dans le caillebotis, est en contact avec le matériau formant le caillebotis.

Ainsi, la surface d'échange thermique entre le fluide caloporteur et le caillebotis est maximisée ce qui permet d'améliorer l'efficacité du caillebotis.

Bien évidemment, l'invention n'est pas limitée aux modes de réalisation décrits précédemment et fournis uniquement à titres d'exemples.

Le caillebotis conforme à l'invention peut être fabriqué dans d'autres matériaux que le béton, tels que le plastique, l'acier, l'inox ou la fonte.

Le conduit de circulation de fluide caloporteur est, par exemple, en matière plastique ou métallique. Toutefois, d'autres matériaux peuvent être envisagés.

Le fluide caloporteur circulant dans le conduit de circulation du caillebotis conforme à l'invention peut être un liquide, tel que de l'eau, ou bien un gaz.

Le conduit de circulation de fluide caloporteur, à l'exception des raccords d'alimentation et d'évacuation, est noyé dans la structure du caillebotis, lors du moulage de ce dernier.

La fabrication du caillebotis consiste à couler du béton dans un moule de forme appropriée en y plaçant préalablement le ou les conduits de fluide caloporteur, et éventuellement l'armature métallique destinée à rigidifier le caillebotis.

Il peut être envisagé que le raccord d'évacuation de fluide caloporteur d'un premier caillebotis soit connecté par un tuyau souple, par exemple, avec le raccord d'alimentation de fluide caloporteur d'un deuxième caillebotis adjacent, de sorte à former un unique circuit de passage du fluide caloporteur.

Le fluide caloporteur peut ainsi traverser successivement plusieurs caillebotis juxtaposés.

Dans les modes de réalisation présentés, le conduit de circulation de fluide caloporteur est constitué d'un unique conduit souple qui est conformé pour prendre la forme désirée.

En alternative, il peut être envisagé que le conduit de circulation de fluide caloporteur soit constitué d'une pluralité de segments rigides et/ou souples raccordés mécaniquement et de manière étanche à chaque extrémité.

Dans une variante de réalisation, il peut être envisagé d'incorporer plusieurs conduits de circulation de fluide caloporteur au sein d'un même caillebotis.

Il peut également être envisagé que le ou les conduits de circulation de fluide caloporteur aient une autre forme que celle d'un serpentin.

Il pourrait ainsi être prévu un ou plusieurs conduits rectilignes s'étendant selon l'axe longitudinal du caillebotis entre les ouvertures.

Par ailleurs, le plancher peut être constitué de caillebotis classiques et de caillebotis conformes à l'invention.

Un bâtiment d'élevage peut être équipé d'un plancher comprenant des caillebotis chauffants et/ou des caillebotis rafraîchissants.

## Revendications

1. Caillebotis (1) de plancher de bâtiment d'élevage d'animaux comprenant plusieurs ouvertures (3) traversantes d'écoulement des déjections animales, **caractérisé en ce qu'**il comprend au moins un conduit (2) de circulation d'un fluide caloporteur noyé dans ledit caillebotis (1) lors du moulage du caillebotis (1), de sorte que ledit au moins un conduit (2) de circulation d'un fluide caloporteur soit enrobé par le matériau formant ledit caillebotis (1), toute la surface externe du conduit (2) de circulation d'un fluide caloporteur étant en contact avec le matériau formant le caillebotis (1).

2. Caillebotis (1) selon la revendication 1, **caractérisé en ce qu'**il comprend plusieurs rangées (30) d'ouvertures (3) traversantes d'écoulement des déjections animales s'étendant parallèlement à l'axe longitudinal dudit caillebotis (1), au moins une portion dudit conduit (2) de circulation d'un fluide caloporteur s'étendant entre deux rangées (30) d'ouvertures (3) consécutives.

3. Caillebotis (1) selon la revendication 2, **caractérisé en ce que** ledit au moins un conduit (2) de circulation d'un fluide caloporteur présente la forme d'un serpentin s'étendant en partie entre chacune des rangées (30) d'ouvertures (3).

4. Caillebotis (1) selon la revendication 1, **caractérisé en ce qu'**il comprend plusieurs ouvertures (3) d'écoulement des déjections animales s'étendant perpendiculairement à l'axe longitudinal dudit caillebotis (1), au moins une portion dudit conduit (2) de circulation d'un fluide caloporteur s'étendant entre deux ouvertures (3) consécutives.

5. Caillebotis (1) selon la revendication 4, **caractérisé en ce que** ledit au moins un conduit (2) de circulation d'un fluide caloporteur présente la forme d'un serpentin s'étendant en partie entre chacune des ouvertures (3) ou entre des groupes (30') d'au moins deux ouvertures (3) consécutives.

6. Caillebotis (1) selon l'une quelconque des revendications précédentes, **caractérisé en ce que** ledit au moins un conduit (2) de circulation d'un fluide caloporteur s'étend d'une extrémité longitudinale (100) dudit caillebotis (1) à l'extrémité opposée (101).

7. Caillebotis (1) selon l'une quelconque des revendications précédentes, **caractérisé en ce que** ledit au moins un conduit (2) de circulation d'un fluide caloporteur comprend au moins un raccord d'alimentation (20) en fluide caloporteur et au moins un raccord d'évacuation (21) du fluide caloporteur.

8. Caillebotis (1) selon la revendication 7, **caractérisé en ce que** lesdits raccords d'alimentation (20) et d'évacuation (21) débouchent au niveau de la surface inférieure (11) dudit caillebotis (1) opposée à la surface supérieure (10) de plancher dudit caillebotis (1).

9. Caillebotis (1) selon la revendication 7 ou 8, **caractérisé en ce que** lesdits raccords d'alimentation (20) et d'évacuation (21) sont inclinés par rapport à ladite surface inférieure (11) .

10. Caillebotis (1) selon l'une quelconque des revendications précédentes, **caractérisé en ce qu'**il est fabriqué en béton.

11. Plancher de bâtiment d'élevage d'animaux, **caractérisé en ce qu'**il comprend une pluralité de caillebotis (1) selon l'une quelconque des revendications 1 à 10.

12. Procédé de fabrication d'un caillebotis (1) de plancher de bâtiment d'élevage d'animaux, **caractérisé en ce qu'**il comprend les étapes suivantes :
- positionner au moins un conduit (2) de circulation d'un fluide caloporteur dans un moule de forme appropriée pour mettre en forme ledit caillebotis (1),
- couler un matériau à l'intérieur dudit au moins un moule de façon à ce que ledit matériau enrobe ledit au moins un conduit (2) de circulation d'un fluide caloporteur et que toute la surface externe du conduit (2) soit en contact avec le matériau destiné à former le caillebotis (1),
- retrait du caillebotis (1) dudit moule.

## Patentansprüche

1. Gitter (1) für den Boden eines Tierzuchtgebäudes mit mehreren Durchgangsöffnungen (3) für den Abfluss tierischer Abfälle, **dadurch gekennzeichnet, dass** es mindestens eine in das Gitter während des Formens des Gitters (1) eingebettete Leitung (2) zur Zirkulation einer Wärmeübertragungsflüssigkeit aufweist (1), so dass die mindestens eine Leitung (2) zur Zirkulation einer Wärmeübertragungsflüssigkeit von dem Material das das Gitter (1) bildet umgeben ist, wobei die gesamte Außenfläche der Leitung (2) zur Zirkulation einer Wärmeübertragungsflüssigkeit mit dem das Gitter (1) bildenden Material in Kontakt steht.

2. Gitter (1) nach Anspruch 1, **dadurch gekennzeichnet, dass** es mehrere Reihen (30) von Durchgangsöffnungen (3) für den Abfluss tierischer Abfälle aufweist, die sich parallel zur Längsachse des Gitters (1) erstrecken, und zumindest in einem Abschnitt der Leitung (2) zur Zirkulation einer Wärmeübertragungsflüssigkeit sich erstreckt zwischen zwei Reihen (30) aufeinanderfolgender Öffnungen (3).

3. Gitter (1) nach Anspruch 2, **dadurch gekennzeichnet, dass** die mindestens eine Leitung (2) zur Zirkulation einer Wärmeübertragungsflüssigkeit die Form einer Serpentine hat, die sich teilweise zwischen jeder der Reihen (30) von Öffnungen (3) erstreckt.

4. Gitter (1) nach Anspruch 1, **dadurch gekennzeichnet, dass** es mehrere senkrecht zur Längsachse des Gitters (1) verlaufende Öffnungen (3) für den Abfluss tierischer Abfälle aufweist, wobei mindestens ein Abschnitt der Leitung (2) zur Zirkulation einer Wärmeübertragungsflüssigkeit sich zwischen zwei aufeinanderfolgenden Öffnungen (3) erstreckt.

5. Gitter (1) nach Anspruch 4, **dadurch gekennzeichnet, dass** die mindestens eine Leitung (2) zum Zirkulation einer Wärmeübertragungsflüssigkeit die Form einer Serpentine hat, die sich teilweise zwischen jeder der Öffnungen (3) oder zwischen Gruppen (30') von mindestens zwei aufeinanderfolgenden Öffnungen (3) erstreckt.

6. Gitter (1) nach einem der vorhergehenden Ansprüche, **dadurch gekennzeichnet, dass** sich die mindestens eine Leitung (2) zur Zirkulation einer Wärmeübertragungsflüssigkeit von einem Längsende (100) des Gitters (1) zum gegenüberliegenden Ende erstreckt (101).

7. Gitter (1) nach einem der vorhergehenden Ansprüche, **dadurch gekennzeichnet, dass** die mindestens eine Leitung (2) zur Zirkulation einer Wärmeübertragungsflüssigkeit mindestens einen Zufuhranschluss (20) für das Wärmeübertragungsflüssigkeit und mindestens einen Abfuhranschluss (21) der Wärmeübertragungsflüssigkeit umfasst.

8. Gitter (1) nach Anspruch 7, **dadurch gekennzeichnet, dass** die Zufuhr- (20) und Abfuhranschlüsse (21) an der unteren Oberfläche (11) des Gitters (1) gegenüber der Bodenoberfläche (10) des Gitters münden (1).

9. Gitter (1) nach Anspruch 7 oder 8, **dadurch gekennzeichnet, dass** die Zufuhr- (20) und Abfuhranschlüsse (21) relativ zur unteren Oberfläche (11) geneigt sind.

10. Gitter (1) nach einem der vorhergehenden Ansprüche, **dadurch gekennzeichnet, dass** es aus Beton besteht.

11. Boden eines Tierzuchtgebäudes, **dadurch gekennzeichnet, dass** er mehrere Gittere (1) nach einem der Ansprüche 1 bis 10 aufweist.

12. Verfahren zur Herstellung eines Gitters (1) für den Boden eines Tierzuchtgebäudes, **dadurch gekennzeichnet, dass** es folgende Schritte umfasst:
- Anordnen mindestens einer Leitung (2) zur Zirkulation einer Wärmeübertragungsflüssigkeit in einer Form, die geeignet ist, das Gitter (1) zu formen,
- Gießen eines Materials in die mindestens eine Form, so dass das Material die mindestens eine Leitung (2) zum Zirkulieren einer Wärmeübertragungsflüssigkeit umgibt und dass die gesamte Außenfläche der Leitung (2) mit dem das Gitter (1) zu formenden Material in Kontakt steht,
- Entfernen des Gitters (1) aus der Form.

## Claims

1. Grating (1) for the floor of an animal breeding building comprising several through openings (3) for the flow of animal waste, **characterized in that** it comprises at least one conduit (2) for circulating a heat transfer fluid embedded in said grating (1) during molding of the grating (1), so that said at least one conduit (2) for circulating a heat transfer fluid is surrounded by the material forming said grating (1), the entire external surface of the conduit (2) for circulating a heat transfer fluid being in contact with the material forming the grating (1).

2. Grating (1) according to claim 1, **characterized in that** it comprises several rows (30) of through openings (3) for the flow of animal waste extending parallel to the longitudinal axis of said grating (1), at least one portion of said conduit (2) for circulating a heat transfer fluid extending between two rows (30) of consecutive openings (3).

3. Grating (1) according to claim 2, **characterized in that** said at least one conduit (2) for circulating a heat transfer fluid has the shape of a serpentine extending partly between each of the rows (30) of openings (3).

4. Grating (1) according to claim 1, **characterized in that** it comprises several openings (3) for the flow of animal waste extending perpendicular to the longitudinal axis of said grating (1), at least one portion of said conduit (2) for circulating a heat transfer fluid extending between two consecutive openings (3).

5. Grating (1) according to claim 4, **characterized in that** said at least one conduit (2) for circulating a heat transfer fluid has the shape of a serpentine extending partly between each of the openings (3) or between groups (30') of at least two consecutive openings (3).

6. Grating (1) according to any one of the preceding claims, **characterized in that** said at least one conduit (2) for circulating a heat transfer fluid extends from a longitudinal end (100) of said grating (1) to the opposite end (101).

7. Grating (1) according to any one of the preceding claims, **characterized in that** said at least one conduit (2) for circulating a heat transfer fluid comprises at least one supply connection (20) for heat transfer fluid and at least one discharge connection (21) of the heat transfer fluid.

8. Grating (1) according to claim 7, **characterized in that** said supply (20) and discharge (21) connections open at the lower surface (11) of said grating (1) opposite the floor upper surface (10) of said grating (1).

9. Grating (1) according to claim 7 or 8, **characterized in that** said supply (20) and discharge (21) connections are inclined relative to said lower surface (11).

10. Grating (1) according to any one of the preceding claims, **characterized in that** it is made of concrete.

11. Floor of an animal breeding building, **characterized in that** it comprises a plurality of gratings (1) according to any one of claims 1 to 10.

12. Method for manufacturing a grating (1) for the floor of an animal breeding building, **characterized in that** it comprises the following steps:
- positioning at least one conduit (2) for circulating a heat transfer fluid in a mold of shape suitable to shape said grating (1),
- pouring a material inside said at least one mold so that said material surrounds said at least one conduit (2) for circulating a heat transfer fluid and that the entire external surface of the conduit (2) is in contact with the material intended to form the grating (1),
- removal of the grating (1) from said mold.
